# EUROPÄISCHE PATENTSCHRIFT

(11) **EP 3 198 300 B1**
(45) Veröffentlichungstag und Bekanntmachung des Hinweises auf die Patenterteilung: **26.08.2020**
(21) Anmeldenummer: 15770797.7
(22) Anmeldetag: 24.09.2015
(51) Int. Cl.: G01S 13/86, G01S 13/931

(54) **VERFAHREN ZUM BETRIEB EINER MEHRZAHL VON RADARSENSOREN IN EINEM KRAFTFAHRZEUG UND KRAFTFAHRZEUG**
METHOD FOR OPERATING A MULTIPLICITY OF RADAR SENSORS IN A MOTOR VEHICLE AND MOTOR VEHICLE
PROCÉDÉ PERMETTANT DE FAIRE FONCTIONNER UNE PLURALITÉ DE CAPTEURS RADAR DANS UN VÉHICULE À MOTEUR ET VÉHICULE À MOTEUR

(30) Priorität: 25.09.2014 DE 102014014307
(43) Veröffentlichungstag der Anmeldung: 02.08.2017
(73) Patentinhaber: Audi AG, 85045 Ingolstadt (DE)
(72) Erfinder: KHLIFI, Rachid, 85748 Garching (DE)
(74) Vertreter: Thielmann, Frank
(86) Internationale Anmeldenummer: PCT/EP2015/001892
(87) Internationale Veröffentlichungsnummer: WO 2016/045794

(56) Entgegenhaltungen:
- EP-A1- 2 439 714
- DE-A1- 19 845 568
- US-A- 5 717 399
- US-A1- 2012 194 377
- US-A1- 2014 191 895

## Beschreibung

Die Erfindung betrifft ein Verfahren zum Betrieb einer Mehrzahl von Radarsensoren in einem Kraftfahrzeug, wobei wenigstens ein Betriebsparameter der Radarsensoren veränderbar ist, sowie ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

In heutigen Kraftfahrzeugen werden Radarsensoren üblicherweise als "stand-alone"-Sensoren betrieben, das bedeutet, jeder Radarsensor entscheidet für sich, unter welchen Betriebsparametern er arbeiten soll und liefert Radardaten, wobei auch bereits Radarsensoren vorgeschlagen wurden, in denen Signal- und Funktionsalgorithmen implementiert sind. In diesem Fall bilden die Radarsensoren selbst auch die Steuergeräte aus und können somit beispielsweise unmittelbar diverse Aktuatoren ansteuern und/oder Ausgaben tätigen, beispielsweise über eine Mensch-Maschine-Schnittstelle des Kraftfahrzeugs. In diesem Kontext wird der zu erfassende Überwachungsbereich durch die realisierte bzw. adressierte Funktion definiert. Das bedeutet, die Radarsensoren sind für eine spezielle Funktion, die beispielsweise einem Fahrzeugsystem zugeordnet sein kann, fest programmiert. Dies limitiert die Verwendung der Radarsensoren für weitere Funktionen, zudem sind die Radarsensoren immer aktiv, was einen hohen Energiebedarf bedeutet.

DE 198 45 568 A1 betrifft eine Vorrichtung zur Objekterfassung für Kraftfahrzeuge, umfassend eine durch eine Vielzahl von Abstandssensoren ausgebildete Abstandssensorik, die derart an einem Kraftfahrzeug angeordnet sind, dass diese die Umgebung des Kraftfahrzeugs abtasten, und eine Auswerteeinheit, die aus den Daten der Abstandssensorik die Bewegungsbahn und die Geschwindigkeit eines Objekts relativ zu dem Kraftfahrzeug ermittelt. Dabei sind die Abstandssensoren wahlweise durch die Auswerteeinheit ansteuerbar und die Reichweite und/oder die Messwiederholfrequenz und/oder die Auflösung und/oder die Betriebsart der Abstandsensoren veränderbar.

US 5 717 399 A offenbart ein Radargerät zur Verwendung in einem Fahrzeug. Dazu sind ein Radarmodul zur Erfassung von Objekten im Nahbereich, umfassend eine Vielzahl von Nahbereichsantennen und eine Sende-/Empfangseinrichtung, und ein Überwachungsmodul zur Erfassung entfernter Objekte, umfassend eine Vielzahl von Fernbereichsantennen und eine Sende-/Empfangseinrichtung, vorgesehen. Daneben weist das Radargerät eine Steuereinrichtung auf, die einen Auflösungsmodus oder das Betriebszeitverhältnis des Radarmoduls verändern kann.

EP 2 439 714 A1 betrifft eine Fahrzeugumgebungsüberwachungseinrichtung und ein entsprechendes Überwachungsverfahren. Dabei ist ein Radarsteuersystem mit einem zentralen Steuergerät vorgesehen, welches mehrere um das Fahrzeug herum angeordnete Radarsensoren ansteuert.

US 2014/0191895 A1 betrifft ein Radarsystem für Fahrzeuge, wobei eine bestimmte Anordnung der wenigstens zwei Radarsensoren zur Umgebungsüberwachung genutzt werden soll. Die Radarsensoren werden durch eine Steuereinheit bezüglich ihrer Sichtweiten angesteuert.

US 2012/0194377 A1 betrifft eine Antennenvorrichtung mit zwei unterschiedlich ausgerichteten Antennen, eine Radarvorrichtung, die eine solche Antennenvorrichtung nutzt, und ein Fahrzeugradarsystem. Ein Fahrzeugradarsystem kann zwei Radarvorrichtungen umfassen, von denen eine als Master, die andere als Slave ausgebildet sein kann.

Der Erfindung liegt daher die Aufgabe zugrunde, den Betrieb von Radarsensoren in Kraftfahrzeugen hinsichtlich der Effizienz und der Verfügbarkeit für unterschiedliche Funktionen von Fahrzeugsystemen zu verbessern.

Zur Lösung dieser Aufgabe sind bei einem Verfahren der eingangs genannten Art erfindungsgemäß die Merkmale des Anspruchs 1 vorgesehen.

Die Erfindung schlägt mithin eine zentralisierte Ansteuerung der Radarsensoren vor, die aus Fahrsituationsdaten über die aktuelle Fahrsituation bestimmt, welche Eigenschaften die aktuell benötigten Sensordaten der Radarsensoren haben sollten, um möglichst nutzbringend durch wenigstens eine Funktion der Fahrzeugsysteme des Kraftfahrzeugs, bevorzugt mehrere Funktionen von Fahrzeugsystemen des Kraftfahrzeugs, verarbeitet zu werden. Dies wird durch ein Anforderungsprofil an die Sensordaten definiert. Ein derartiges Anforderungsprofil kann beispielsweise enthalten, aus welchen interessierenden Umfeldbereichen Sensordaten benötigt werden, wie häufig/ schnell diese Sensordaten benötigt werden und in welcher Qualität die Sensordaten benötigt werden. Nachdem der das erfindungsgemäße Verfahren ausführenden Einrichtung bekannt ist, wo die Radarsensoren angeordnet sind und welche Eigenschaften die Radarsensoren haben, ist es möglich, dieses Anforderungsprofil unter Kenntnis der Erfassungseigenschaften der Radarsensoren auf Betriebsparameter der Radarsensoren abzubilden, die das Anforderungsprofil möglichst gut erfüllen. Es wird mithin eine ganzheitliche Betrachtung der Leistungsfähigkeit aller Radarsensoren vorgenommen, um so das Anforderungsprofil möglichst genau erfüllen zu können und dabei auch Verbesserungen hinsichtlich des Energiebedarfs, der Busauslastungen und/oder des Rechenressourcenbedarfs zu erreichen, nachdem beispielsweise entschieden werden kann, welche Radarsensoren gerade nicht benötigt werden und welche Radarsensoren benötigt werden. Wird eine geeignete Architektur der Radarsensoren selber gewählt oder werden die Radarsensoren gar an eine zentrale Einheit angebunden, können viele Applikationen, konkret Funktionen von Fahrzeugsystemen, von der Performance dieser Konfigurationsoptimierung profitieren. Es wird mithin Zusatzinformation über die Fahrsituation genutzt, um einen möglichst effizienten Betrieb der Gesamtheit der Radarsensoren zu bestimmen, wobei die Wechselwirkung, Ergänzung und dergleichen der Erfassungseigenschaften aller Radarsensoren berücksichtigt wird.

Das Anforderungsprofil kann beispielsweise durch Anforderungsparameter beschrieben werden, die bevorzugt für verschiedene Umfeldbereiche des Umfelds des Kraftfahrzeugs angeben, mit welcher Priorität von dort Daten benötigt werden (bzw. ob überhaupt Daten von dort benötigt werden), was die gewünschte Genauigkeit der Sensordaten aus dem Umfeldbereich ist sowie wie schnell und/oder mit welcher Häufigkeit idealerweise Daten gewonnen werden sollten. Ergibt sich aus den Fahrsituationsdaten beispielsweise, dass gerade ein Abbiegevorgang vorliegt, sind letztlich nur Sensordaten aus der Richtung relevant, in die das Kraftfahrzeug abbiegt, beispielsweise also bei einem Linksabbiegevorgang nach links ausgerichtete Radarsensoren. Die anderen Radarsensoren können beispielsweise deaktiviert werden. Wurde bereits ein potentieller Kollisionspartner erkannt, der genauer vermessen werden soll, kann beispielsweise ein kritischer Umfeldbereich definiert werden, der diesen potentiellen Kollisionspartner enthält und aus dem äußerst schnell äußerst genaue Radardaten erhalten werden können. Hierfür können beispielsweise Datenaufnahmeraten bzw. Genauigkeiten anderer Radarsensoren reduziert werden, um dennoch einen schnellen Transport und eine schnelle Auswertung dieser Sensordaten aus dem kritischen Umfeldbereich zu ermöglichen. Mithin ergeben sich durch Auswertung des Anforderungsprofils sowie idealerweise zusätzlich noch Effizienzkriterien hervorragend zwischen den Radarsensoren abgestimmte Betriebsstrategien.

Dabei können besonders vorteilhaft Radarsensoren eingesetzt werden, die einen den Radar-Transceiver realisierenden Halbleiterchip, insbesondere einen CMOS-Chip, umfassen. Diese eingangs beschriebenen neuartigen, insbesondere im CMOS-Technologie realisierten Radarsensoren bieten nicht nur den Vorteil, äußerst kleinbauend realisiert werden zu können und somit beispielsweise in Türen, Stoßfängern und dergleichen eingebaut zu werden, sondern es ist dann auch möglich, insbesondere, wenn durch den Halbleiterchip auch eine digitale Signalverarbeitungskomponente und/oder eine Steuereinheit des Radarsensors realisiert sind, einen Teil der Intelligenz in diesen Radarsensoren vorzusehen und insbesondere eine schnelle und effiziente Veränderung von Betriebsparametern im Radarsensor zu ermöglichen. So ist es beispielsweise denkbar, die Radarsensoren so zu realisieren, dass sie zwischen verschiedenen Frequenzbandbreiten, Datenaufnahmeraten und dergleichen umgeschaltet werden können. Eine besonders kompakte, hochintegrierte Bauweise ergibt sich, wenn der Halbleiterchip und eine Antennenanordnung des Radarsensors als ein Package realisiert sind. Dann kann der Radarsensor beispielsweise durch das auf einer Leiterplatte angeordnete Package äußerst kleinbauend gebildet werden.

Allgemein gesagt kann durch die Betriebsparameter eine Aktivierung und/oder eine Deaktivierung eines Radarsensors ausgelöst werden und/oder es können als Betriebsparameter eine Datenaufnahmerate und/oder wenigstens ein den Erfassungsbereich beschreibender Betriebsparameter und/oder ein die Abstandstrennfähigkeit beschreibender Betriebsparameter und/oder ein die seitens des Radarsensors vorzunehmende Vorauswertung beschreibender Betriebsparameter verwendet werden. Es ist mithin zum einen denkbar, durch einen entsprechenden Betriebsparameter einen Radarsensor temporär an- oder auszuschalten, es ist jedoch auch möglich, dass als Betriebsparameter allgemein gesagt die aktuellen Erfassungseigenschaften verändernde Betriebsparameter eingesetzt werden. Die bei der Umsetzung des Anforderungsprofils berücksichtigten Erfassungseigenschaften der Radarsensoren sind mithin so zu verstehen, dass die grundsätzlichen Einstellmöglichkeiten der Radarsensoren und ihre Auswirkungen auf die aktuellen Erfassungseigenschaften davon umfasst sind. Mithin geben die allgemeinen Erfassungseigenschaften der Radarsensoren im Hinblick auf die Betriebsparameter die grundsätzlichen Möglichkeiten zur Einstellung auf einen konkreten Betriebszustand mit bestimmten aktuellen Erfassungseigenschaften an, enthalten jedoch auch die Anordnung des Radarsensors und erlauben diesbezüglich einen Rückschluss auf den erfassten Teil des Umfelds des Kraftfahrzeugs.

Eine konkrete vorteilhafte Ausgestaltung der vorliegenden Erfindung sieht vor, dass bei einem durch das Anforderungsprofil beschriebenen interessierenden Umfeldbereich nur die den interessierenden Umfeldbereich erfassenden Radarsensoren oder die den interessierenden Umfeldbereich erfassenden Radarsensoren mit häufigere und/oder genauere Sensordaten als die sonstigen Radarsensoren liefernden Betriebsparametern betrieben werden. Ferner ist es, wie bereits beschrieben wurde, denkbar, dass bei einem durch das Anforderungsprofil beschriebenen kritischen Umfeldbereich insbesondere als Unterbereich des interessierenden Umfeldbereichs wenigstens zwei Radarsensoren zur redundanten Erfassung wenigstens eines Teils des kritischen Umfeldbereichs betrieben werden. Dies sei anhand einiger konkreter Beispiele genauer erläutert.

Wird beispielsweise festgestellt, dass ein Rechtsabbiegen durchgeführt wird, werden nur die Radarsensoren für die relevanten rechten seitlichen Umfeldbereiche aktiviert. Die linksseitigen Sensoren sind bei diesem Fahrmanöver, also dem Rechtsabbiegen, nicht relevant. Das bedeutet, sie können abgeschaltet werden oder mit reduziertem Aufwand betrieben werden, so dass mit einer derartigen gezielten An- und Abschaltung bzw. Reduzierung der Anforderungen eine effiziente Nutzung der gesamten Radarsensoren, insbesondere im Hinblick auf Busbandbreite, Rechenressourcen, Energie/ Betriebsstrom, Performance in Sachen Dynamik/Genauigkeit/Redundanz, etc. realisiert wird. Sollen beispielsweise in einem interessierenden Umfeldbereich Objekte fein voneinander getrennt werden, ist es möglich, wenigstens ein Radarsensor mit einer höheren Frequenzbandbreite, beispielsweise 3 GHz, zu betreiben, während die restlichen Radarsensoren mit einer niedrigen Bandbreite, beispielsweise 100 MHz, betrieben werden. Genauso ist es möglich, einige Radarsensoren mit einer höheren Zykluszeit (niedrigere Datenaufnahmerate) und andere mit einer niedrigeren Zykluszeit (höhere Datenaufnahmerate) zu betreiben.

Die Detektionsqualität kann, beispielsweise durch Reduzierung von Mehrdeutigkeiten, erhöht werden, wenn mehrere benachbarte Radarsensoren, deren Erfassungsbereiche in Überlappungsbereichen überlappen, bestimmte Objekte redundant detektieren können. Ist das Objekt in den Sensordaten aller dieser Radarsensoren enthalten, können die Sensordaten bezüglich des Objekts entsprechend statistisch zusammengeführt werden.

Wie bereits erwähnt, ist es allgemein besonders vorteilhaft, wenn bei der Anpassung der Betriebsparameter der Radarsensoren auch wenigstens ein den Energieverbrauch und/oder die zu transportierende Datenmenge und/oder die benötigten Rechenressourcen minimierendes Effizienzkriterium berücksichtigt wird. Das bedeutet, das durch die Radarsensoren gebildete Radarsystem wird im Hinblick auf den Energieverbrauch, die genutzte Busbandbreite, die Rechenressourcen und dergleichen möglichst sparsam betrieben, wobei selbstverständlich Anforderungsprofile, beispielsweise hinsichtlich potentieller Kollisionseffekte oder sonstiger möglicherweise riskanter Fahrmanöver diese Effizienzkriterien grundsätzlich überwiegen. Letztlich ist also die im erfindungsgemäßen Betriebsverfahren ausgewertete Fragestellung die, wie das Anforderungsprofil bei ansonsten möglichst hoher Effizienz erreicht werden kann. In diesem Kontext kann beispielsweise vorgesehen sein, dass bei einem nicht kritischen Anteil eines in dem Anforderungsprofil enthaltenden interessierenden Umfeldbereichs redundant erfassenden Radarsensoren einer der Radarsensoren abgeschaltet wird und/oder sein Erfassungsbereich zur Minimierung der Redundanz angepasst wird. Es ist also auch durchaus möglich, falls eine Steigerung der Detektionsqualität nicht gewünscht ist, Radarsensoren abzuschalten, die die gleichen Messungen vom identischen Objekt liefern. So können Energie und Rechenressourcen gespart werden und die Datenmenge im Bussystem reduziert werden. Dies gilt selbstverständlich auch für Radarsensoren, die für das aktuelle Verkehrsszenario nicht relevant sind.

Mit besonderem Vorteil kann vorgesehen sein, dass in ihren Erfassungsbereichen das Umfeld des Kraftfahrzeugs in einem 360°-Winkelbereich erfassende Radarsensoren verwendet werden. Es können also mehrere Radarsensoren im Kraftfahrzeug derart eingesetzt werden, dass eine 360°-Überwachung des gesamten Umfelds des Kraftfahrzeugs ermöglicht wird, wodurch im Übrigen auch eine genauere Kartierung des gesamten Umfelds (statisch und dynamisch) erzielt werden kann. Durch Auswahl einer geeigneten Architektur bzw. Anbindung der Radarsensoren an die das erfindungsgemäße Verfahren durchführende Einheit lässt sich insgesamt ein Radarsystem schaffen, das auf die aktuelle Fahrsituation und die tatsächlich von Funktionen der Fahrzeugsysteme benötigten Informationen in seiner Betriebsweise dynamisch angepasst werden kann, wobei zudem ein effizienter Betrieb möglich ist. Eine derartige Anordnung von Radarsensoren kann beispielsweise mit acht Radarsensoren erreicht werden, wenn jeweils in den Eckbereichen des Kraftfahrzeugs und zwischen den Ecken des Kraftfahrzeugs angeordnete Radarsensoren verwendet werden. Dabei können die an den Ecken des Kraftfahrzeugs vorgesehenen Radarsensoren beispielsweise in einem 45°-Winkel zur Längsrichtung des Kraftfahrzeugs ausgerichtet werden, die zwischen den Ecken angeordneten Radarsensoren jeweils senkrecht zu der Seite, in der sie angeordnet sind, ausgerichtet sein.

Es können unterschiedliche Einheiten verwendet werden, welche mithin die Auswertung, die Ermittlung der Betriebsparameter und die Ansteuerung der Radarsensoren gemäß der Betriebsparameter übernehmen. Dabei ist in einer ersten, nicht erfindungsgemäßen Ausführungsform vorgesehen, dass die Auswertung der Fahrsituation und die Ansteuerung der Radarsensoren seitens eines zentralen Steuergeräts des Kraftfahrzeugs erfolgt, welches insbesondere wenigstens zwei Fahrzeugsystemen zugeordnet ist. Derartige zentrale Steuergeräte sind beispielsweise unter dem Schlagwort "zentrales Fahrerassistenzsystem" (zFAS) bekannt. Die Idee ist es, dass alle von Fahrerassistenzsystemen durchzuführenden Funktionen auf einem einzigen Steuergerät realisiert sind, welches auch die Sensordaten aller angeschlossenen Sensoren, mithin auch der Radarsensoren, empfängt. In diesem Zusammenhang ist es besonders zweckmäßig, wenn das Steuergerät auch ein Umfeldmodell des Kraftfahrzeugs ermittelt und aktualisiert, da dann die Fahrsituationsdaten auch Daten des Umfeldmodells, welches ohnehin in dem Steuergerät vorliegt, umfassen können. Zudem empfängt ein solches zentrales Steuergerät meist ohnehin weitere den aktuellen Betriebszustand und die Fahrsituation beschreibende Fahrsituationsdaten, so dass sich bei Vorliegen aller nötigen Eingangsdaten die Ermittlung des Anforderungsprofils sowie der Betriebsparameter besonders leicht als zusätzliche Funktion realisieren lässt. Dabei sind verschiedene Verbindungsarchitekturen der Radarsensoren mit dem zentralen Steuergerät denkbar, beispielsweise für jeden Radarsensor eine eigene Verbindung (Sternarchitektur), oder aber die Verwendung von Ringen oder Ketten, entlang denen die Radarsensoren angeschlossen sind. Neben den allgemeinen Fahrsituationsdaten ist es in einem solchen zentralen Steuergerät auch möglich, von den Funktionen letztlich direkt abzufragen, welche Sensordaten sie von den Radarsensoren benötigen, um dies in das Anforderungsprofil einfließen zu lassen. Dabei kann eine Gewichtung unterschiedlicher Funktionen, beispielsweise durch Priorisierung, vorgenommen werden.

In der erfindungsgemäßen, zweiten Ausführungsform ist erfindungsgemäß vorgesehen, dass die Auswertung der Fahrsituation und die Ansteuerung der Radarsensoren seitens einer Recheneinrichtung wenigstens eines der Radarsensoren erfolgt. Nachdem moderne Radarsensoren selbst eine gewisse Intelligenz aufweisen, beispielsweise im Fall der beschriebenen, in Halbleitertechnologie realisierten Radarsensoren, die eine Steuereinheit und/oder digitale Signalverarbeitungskomponenten durch den Halbleiterchip realisieren, kann mithin problemlos die durch das erfindungsgemäße Verfahren beschriebene Funktion zur Ermittlung des Anforderungsprofils und der Betriebsparameter auch innerhalb eines Radarsensors realisiert werden. Der Radarsensor, dessen Recheneinrichtung diese zentrale Abstimmung übernimmt, hat letztlich eine Master-Rolle inne, während die restlichen Radarsensoren als Slaves aufgefasst werden können. Der Master-Radarsensor nutzt entsprechende Algorithmen, die beispielsweise Teil eines Entscheidungsmoduls sein können, um die Fahrsituationsdaten zu dem Anforderungsprofil auszuwerten und hieraus geeignete Betriebsparameter abzuleiten. Denkbar ist es im Übrigen auch, dass ein derartiger Master-Radarsensor als Verteilstelle für die Sensordaten der Radarsensoren fungiert, mithin beispielsweise zunächst alle Sensordaten aller Radarsensoren entgegennimmt und diese weiterleitet oder gar selbst Funktionen wenigstens eines Fahrzeugsystems realisiert, das die Sensordaten auswertet.

Besonders zweckmäßig ist es in diesem Zusammenhang, dass der Radarsensor, dessen Recheneinrichtung verwendet wird, dynamisch in Abhängigkeit der Fahrsituationsdaten und/oder der Betriebsparameter ausgewählt wird. Jeder Radarsensor kann also grundsätzlich als Master oder Slave konfiguriert werden, auch im Fahrbetrieb, beispielsweise abhängig vom aktuellen Verkehrsszenario, also der aktuellen Fahrsituation. Hierdurch wird eine besonders effiziente Ausnutzung (Verteilung der Intelligenz) der Konfiguration mit mehreren Radarsensoren realisiert. Zur Auswahl des aktuell als Master zu benutzenden Radarsensors können beispielsweise Datenübertragungswege von den die relevanteste Sensordaten liefernden weiteren Radarsensoren und dergleichen berücksichtigt werden.

Wie bereits erwähnt wurde, können als Fahrsituationsdaten verschiedenste, die Fahrsituation beschreibende Eingangsdaten eingesetzt werden. So kann insbesondere vorgesehen sein, dass als Fahrsituationsdaten den Betriebszustand des Kraftfahrzeugs und/oder wenigstens einen prädiktiven Betriebszustand des Kraftfahrzeugs beschreibende Egodaten und/oder das Umfeld des Kraftfahrzeugs beschreibende Umfelddaten und/oder konkrete Anforderungen von wenigstens einem Fahrzeugsystem beschreibende Anforderungsdaten verwendet werden. Aus diesen Informationen ergibt sich ein Gesamtbild der Fahrsituation, aus dem das Anforderungsprofil, beispielsweise als Anforderungsparameter, abgeleitet werden kann. Werden Anforderungsdaten von Fahrzeugsystemen bzw. auch einzelnen Funktionen von Fahrzeugsystemen verwendet, kann innerhalb der Fahrzeugsysteme und/oder der Funktionen eine Priorisierung vorgesehen sein, so dass beispielsweise sicherheitsrelevante Fahrzeugsysteme höher priorisiert werden als komfortrelevante Fahrzeugsysteme und dergleichen.

Neben dem Verfahren betrifft die Erfindung auch ein Kraftfahrzeug gemäß Anspruch 9. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können. Bei dem Steuergerät handelt es sich dabei bevorzugt um ein zentrales Steuergerät, das die Funktionen mehrerer Fahrzeugsysteme realisiert und gegebenenfalls auch ein Umfeldmodell des Kraftfahrzeugs ermittelt und aktuell hält.

Vorzugsweise können die Radarsensoren einen den Radar-Transceiver realisierenden Halbleiterchip, insbesondere einen CMOS-Chip, umfassen. Besonders zweckmäßig ist es in diesem Zusammenhang, wenn durch den Halbleiterchip auch eine digitale Signalverarbeitungskomponente und/oder eine Steuereinheit des Radarsensors realisiert sind und/oder der Halbleiterchip und eine Antennenanordnung des Radarsensors als ein Package realisiert sind. Derartige Radarsensoren lassen sich, wie bereits ausgeführt wurde, äußerst kleinbauend realisieren und sind, insbesondere bei Verwendung der CMOS-Technologie, günstig herzustellen und somit verfügbar. So lassen sich auch größere Zahlen von Radarsensoren bauraumsparend und idealerweise von außen unsichtbar in verschiedene Komponenten des Kraftfahrzeugs integrieren, beispielsweise in eine Fahrzeugtür und/oder einen Stoßfänger. Insbesondere bei Integration digitaler Signalverarbeitungskomponenten und/oder Steuereinheiten in den Halbleiterchip liegt seitens der Radarsensoren auch eine entsprechende Intelligenz zur Durchführung von Funktionen, insbesondere auch des erfindungsgemäßen Verfahrens, vor, so dass vorgesehen sein kann, dass als Recheneinrichtung zur Durchführung des erfindungsgemäßen Verfahrens die digitale Signalverarbeitungskomponente und/oder die Steuereinheit eines Radarsensors verwendet werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein Kraftfahrzeug in einer ersten, nicht erfindungsgemäßen Ausführungsform,
- Fig. 2: die Erfassungsbereiche der Radarsensoren des Kraftfahrzeugs,
- Fig. 3: einen Ablaufplan des erfindungsgemäßen Verfahrens,
- Fig. 4: eine Skizze zum Aufbau eines Radarsensors, und
- Fig. 5: ein erfindungsgemäßes Kraftfahrzeug in einer zweiten, erfindungsgemäßen Ausführungsform.

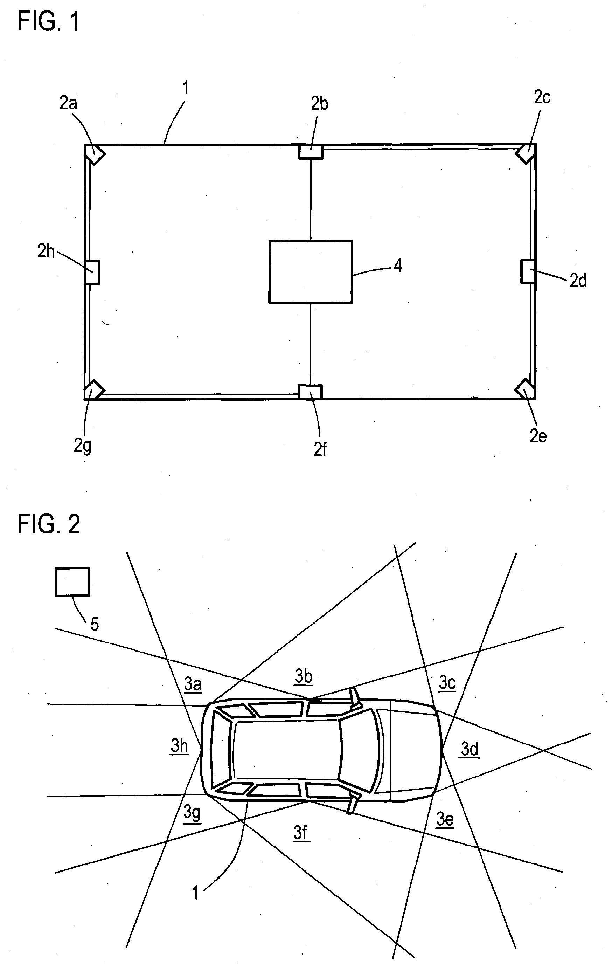

Fig. 1 zeigt eine Prinzipskizze eines Kraftfahrzeugs 1 einer ersten, nicht erfindungsgemäßen Ausführungsform. Um eine 360°-Überwachung des Umfelds des Kraftfahrzeugs 1 zu ermöglichen, weist dieses vorliegend acht Radarsensoren 2a - 2h auf, wobei vier Radarsensoren 2a, 2c, 2e, 2g an den Ecken des Kraftfahrzeugs 1 angeordnet sind, die restlichen Radarsensoren 2b, 2d, 2f und 2h an den Seiten jeweils mittig zwischen den Eck-Radarsensoren 2a, 2c, 2e und 2g. Die zugehörigen größtmöglichen Erfassungsbereiche der Radarsensoren 2a - 2h sind in Fig. 2 dargestellt und mit den Bezugszeichen 3a - 3h bezeichnet. Ersichtlich wird ein 360°-Winkelbereich erfasst. Die Radarsensoren 2a, 2c, 2d, 2e, 2g und 2h können dabei in den Stoßfängern des Kraftfahrzeugs 1 angeordnet sein, die Radarsensoren 2b und 2f in den Türen. Verschiedene Betriebsparameter der Radarsensoren 2a - 2h lassen sich einstellen, insbesondere die aktuellen Erfassungseigenschaften definierende Betriebsparameter wie Öffnungswinkel, Bandbreite, Datenaufnahmerate und dergleichen.

Um den Betrieb der Radarsensoren 2a - 2h zu steuern, ist ein zentrales Steuergerät 4 vorgesehen. Mit dem Steuergerät 4 sind die Radarsensoren 2a - 2h vorliegend je vier Stück über eine Kette verbunden, wobei jedoch auch andere Verbindungsarchitekturen denkbar sind. Das zentrale Steuergerät 4 führt vorliegend verschiedene Funktionen mehrerer Fahrerassistenzsysteme, insbesondere aller Fahrerassistenzsysteme, aus und ermittelt und aktualisiert aus Sensordaten der Radarsensoren 2a - 2h sowie weiterer Sensoren des Kraftfahrzeugs 1, die hier nicht näher dargestellt sind, ein Umfeldmodell des Kraftfahrzeugs 1, welches durch die verschiedenen Funktionen berücksichtigt wird. Ferner werden dem zentralen Steuergerät 4 über hier nicht näher gezeigte weitere Fahrzeugsysteme Egodaten des Kraftfahrzeugs zur Verfügung gestellt, die den aktuellen Betriebszustand des Kraftfahrzeugs 1 sowie gegebenenfalls prädizierte zukünftige Betriebszustände beschreiben können. Mithin ist es innerhalb des Steuergeräts 4 möglich, ein gutes Abbild der aktuellen Fahrsituation des Kraftfahrzeugs 1 durch die vorliegenden Fahrsituationsdaten sowie gegebenenfalls weitere Daten der Funktionen zu erstellen.

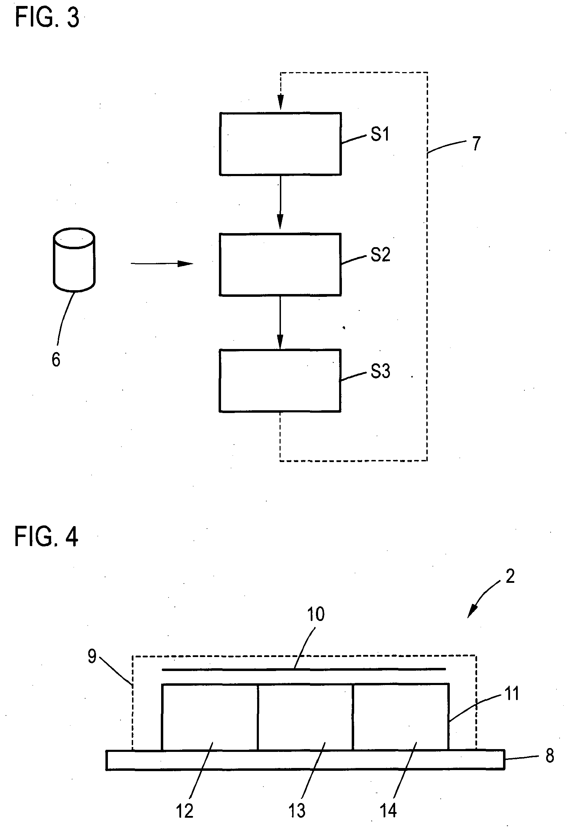

Dies wird im Rahmen des erfindungsgemäßen Verfahrens ausgenutzt, dessen Ablaufplan in Fig. 3 näher dargestellt ist.

In einem Schritt S1 wird dabei aus aktuellen Fahrsituationsdaten, die die Fahrsituation des Kraftfahrzeugs 1 beschreiben, ein Anforderungsprofil an die Sensordaten der Radarsensoren 2a - 2h ermittelt. Als Fahrsituationsdaten werden dabei beispielsweise das Umfeld des Kraftfahrzeugs beschreibende Umfelddaten, beispielsweise das beschriebene Umfeldmodell, und Egodaten des Kraftfahrzeugs 1, beispielsweise dessen Geschwindigkeit, Lenkwinkel und dergleichen, berücksichtigt. Zweckmäßig ist es, zusätzlich noch Anforderungsdaten der Funktionen, die Sensordaten der Radarsensoren 2a - 2h verwenden, zu berücksichtigen, wobei die Funktionen bzw. die entsprechenden Fahrzeugsysteme untereinander priorisiert sein können.

Durch Verarbeitung all dieser Daten ergibt sich in Schritt S1 ein Anforderungsprofil, welches beispielsweise durch Anforderungsparameter beschrieben sein kann. Ein derartiges Anforderungsprofil kann zunächst angeben, aus welchem interessierenden Umfeldbereich des Umfelds des Kraftfahrzeugs 1 überhaupt Sensordaten gewonnen werden sollen. Dieser interessierende Umfeldbereich kann nun noch in Anteile unterteilt werden, denen beispielsweise Prioritäten und/oder Attribute zugeordnet werden. Ist beispielsweise in einem kritischen Umfeldbereich als Teilbereich des interessierenden Umfeldbereichs ein potentielles Kollisionsobjekt detektiert worden, vgl. in Fig. 2 beispielsweise das Objekt 5, kann dieser kritische Umgebungsbereich hoch priorisiert werden und/oder können aus diesem Bereich besonders genaue Sensordaten besonders schnell angefordert werden. Andere interessierende und/oder gar kritische Umfeldbereiche ergeben sich beispielsweise aus der aktuellen Fahrtrichtung des Kraftfahrzeugs 1. Fährt dieses beispielsweise rückwärts, ist der hinter dem Kraftfahrzeug 1 liegende Umfeldbereich der interessierende Umfeldbereich; liegt ein Abbiegevorgang nach rechts vor, ist der rechts vom Kraftfahrzeug 1 liegende Umfeldbereich der interessierende Umfeldbereich und dergleichen. Ersichtlich lässt sich also aus der Fahrsituation schlussfolgern, von wo in welcher Häufigkeit, Schnelligkeit und Qualität Sensordaten der Radarsensoren 2a - 2h benötigt werden, was durch das Anforderungsprofil beschrieben wird.

In einem Schritt S2 werden aus diesem Anforderungsprofil unter Berücksichtigung von Effizienzkriterien 6 nun Betriebsparameter ermittelt, mit denen sich dieses Anforderungsprofil (am besten) realisieren lässt. Diese Betriebsparameter können auch einen Betriebsparameter umfassen, der ein Aktivieren und ein Deaktivieren des jeweiligen Radarsensors 2a - 2h steuert. Effizienzkriterien 6 beziehen sich insbesondere auf den Energieverbrauch, die Beschränkung des Datenverkehrs auf den Bussystemen des Kraftfahrzeugs 1 sowie eine möglichst geringe Auslastung von Rechenressourcen. Liegt beispielsweise ein Rechtsabbiegevorgang vor, werden grundsätzlich keine oder nur sehr wenige Daten von den nach links gerichteten Radarsensoren 2e, 2f und 2g benötigt, so dass diese beispielsweise deaktiviert werden können, was Energie und Datenverkehr sowie Rechenressourcen einspart. Die Sensoren 2h und 2d, die nach vorne bzw. nach hinten gerichtet sind, liefern Daten, die relevant sein könnten, aber nicht so relevant wie die beispielsweise von den Sensoren 2a und 2b gelieferten Sensordaten, so dass die Erfassungsbereiche der Sensoren 2a und 2b idealerweise so angepasst werden können, dass sie den wichtigsten Umfeldbereich widergeben und eine besonders hohe Datenaufnahmerate bei hoher Genauigkeit gegeben ist, während die Sensoren 2h und 2d mit unterdurchschnittlichen Datenaufnahmeraten und eher kleineren Qualitätsanforderungen betrieben werden können, während der Sensor 2c mit mittleren Betriebsparametern weiterbetrieben werden kann.

Gibt das Anforderungsprofil in einem anderen Beispiel wider, dass genaue Daten von dem potentiellen Kollisionsobjekt 5 (vgl. Fig. 2) benötigt werden, können die Erfassungsbereiche der Sensoren 3a, 3b und 3h (Fig. 2 zeigt die maximal möglichen Erfassungsbereiche) so eingestellt werden, dass alle drei Radarsensoren 3a, 3b und 3h das Objekt 5 erfassen, so dass eine redundante Erfassung gegeben ist und genauere Informationen über das Objekt 5 erhalten werden können. Es ist jedoch auch der Fall denkbar, dass keine kritische Fahrsituation vorliegt und mithin aufgrund der Effizienzkriterien 6 Objekte nur einmal erfasst werden sollen. Die aktuellen, tatsächlich verwendeten Erfassungsbereiche der Sensoren 3a, 3b und 3h können in einem solchen Fall so angepasst werden, dass nur einer dieser Radarsensoren 3a, 3b und 3h, beispielsweise der Radarsensor 3a, das Objekt 5 tatsächlich vermisst.

Wie diese konkreten Beispiele zeigen, können eine Vielzahl von Fahrsituationen auf entsprechende Anforderungsprofile abgebildet werden, aus welchen wiederum ein optimal geeigneter Satz von Betriebsparametern für die Radarsensoren 2a - 2h folgt, die dieses Anforderungsprofil möglichst effizient erfüllen, beispielsweise, indem manche Sensoren abgeschaltet/aktiviert werden, mit höherem oder niedrigerem Ressourcenbedarf betrieben werden und dergleichen.

In einem Schritt S3 werden schließlich die Radarsensoren 2a - 2h entsprechend der im Schritt S2 ermittelten Betriebsparameter angesteuert. Wie der gestrichelte Pfeil 7 in Fig. 3 andeutet, wird das Verfahren selbstverständlich zyklisch wiederholt, so dass immer die aktuelle Fahrsituation durch entsprechende Betriebsparametersätze abgebildet wird, wobei jeweils eine gesamtheitliche Betrachtung des durch die Radarsensoren 2a - 2h gebildeten Radarsysteme vorgenommen wird, um Anforderungsprofile optimal zu erfüllen.

Fig. 4 zeigt einen besonders vorteilhaft verwendbaren Radarsensor 2 genauer. Dieser umfasst eine Leiterplatte 8, auf der ein Package 9 angeordnet ist, das aus der Antennenanordnung 10 des Radarsensors 2 und einem Halbleiterchip 11, hier einem CMOS-Chip, gebildet ist. Durch den CMOS-Chip 11 werden ein Radar-Transceiver 12, eine Steuereinheit 13 und eine digitale Signalverarbeitungskomponente 14 (DSP) realisiert. Der Radarsensor 2 lässt sich äußerst kleinbauend realisieren und somit bauraumsparend in Türen und Stoßfängern des Kraftfahrzeugs 1 einbauen. Zudem ist durch die durch den Halbleiterchip 11 realisierten Komponenten radarsensorseitig bereits eine gewisse Intelligenz gegeben.

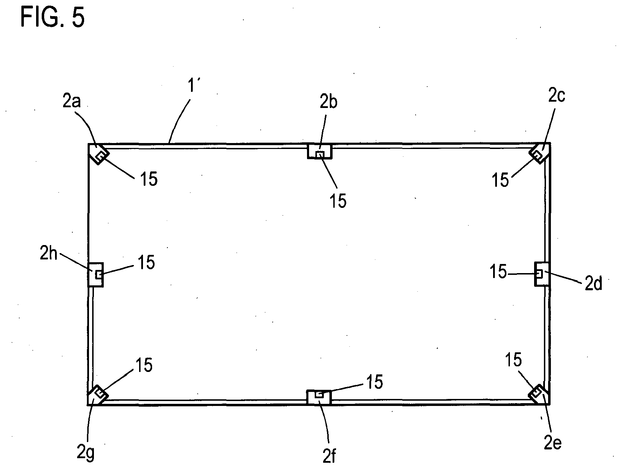

Dies wird in einer zweiten, erfindungsgemäßen Ausführungsform eines Kraftfahrzeugs 1' ausgenutzt, wie es in Fig. 5 zu sehen ist. Dort ist das zentrale Steuergerät 4, obwohl es auch vorgesehen sein kann, nicht gezeigt, und die Sensoren 2a - 2h sind in einer ringartigen Verbindungsstruktur untereinander verbunden. Allerdings weist jeder der Sensoren 2a - 2h nun eine Recheneinrichtung 15 auf, die zur Durchführung des erfindungsgemäßen Verfahrens ausgebildet ist, welche vorliegend durch die Steuereinheit 13 und/oder die digitale Signalverarbeitungskomponente 14 gebildet ist. Einer der Sensoren 2a - 2h wird nun, insbesondere abhängig von der Fahrsituation, als Master bestimmt und seine Recheneinrichtung 15 führt das erfindungsgemäße Verfahren aus, bis ein anderer Sensor 2a - 2h als Master bestimmt wird. Die anderen Sensoren 2a - 2h, die nicht der Master sind, wirken letztlich als Slave. Auf diese Weise lässt sich die verteilte Intelligenz, die in den Radarsensoren 2a - 2h gegeben ist, besonders zweckmäßig nutzen.

## Patentansprüche

1. Verfahren zum Betrieb einer Mehrzahl von Radarsensoren (2, 2a-2h) in einem Kraftfahrzeug (1, 1'), wobei in ihren Erfassungsbereichen (3a-3h) das Umfeld des Kraftfahrzeugs (1, 1') in einem 360°-Winkelbereich erfassende Radarsensoren (2, 2a-2h) verwendet werden und wenigstens ein Betriebsparameter der Radarsensoren (2, 2a-2h) veränderbar ist, wobei eine aktuelle Fahrsituation des Kraftfahrzeugs (1, 1') beschreibende Fahrsituationsdaten zur Ermittlung eines Anforderungsprofils an die Sensordaten der Radarsensoren (2, 2a-2h) ausgewertet werden und unter Berücksichtigung wenigstens der Erfassungseigenschaften aller Radarsensoren (2, 2a-2h) die Betriebsparameter der Radarsensoren (2, 2a-2h) auf das Anforderungsprofil angepasst werden,
**dadurch gekennzeichnet,**
**dass** jeder der Radarsensoren (2, 2a-2h) eine Recheneinrichtung (15) aufweist und die Auswertung der Fahrsituation und die Ansteuerung der Radarsensoren (2, 2a-2h) seitens der Recheneinrichtung (15) wenigstens eines der Radarsensoren (2, 2a-2h) erfolgt, wobei der Radarsensor (2, 2a-2h), dessen Recheneinrichtung (15) verwendet wird, dynamisch in Abhängigkeit der Fahrsituationsdaten und/oder der Betriebsparameter ausgewählt wird.

2. Verfahren nach Anspruch 1,
**dadurch gekennzeichnet,**
**dass** durch die Betriebsparameter eine Aktivierung und/oder eine Deaktivierung eines Radarsensors (2, 2a-2h) ausgelöst wird und/oder als Betriebsparameter eine Datenaufnahmerate und/oder wenigstens ein den Erfassungsbereich (3a-3h) beschreibender Betriebsparameter und/oder wenigstens ein die Abstandstrennfähigkeit beschreibender Betriebsparameter und/oder wenigstens ein die seitens des Radarsensors (2, 2a-2h) vorzunehmende Vorauswertung beschreibender Betriebsparameter verwendet werden.

3. Verfahren nach Anspruch 1 oder 2,
**dadurch gekennzeichnet,**
**dass** bei einem durch das Anforderungsprofil beschriebenen interessierenden Umfeldbereich nur die den interessierenden Umfeldbereich erfassenden Radarsensoren (2, 2a-2h) oder die den interessierenden Umfeldbereich erfassenden Radarsensoren (2, 2a-2h) mit häufiger und/oder genauere Sensordaten als die sonstigen Radarsensoren (2, 2a-2h) liefernden Betriebsparametern betrieben werden.

4. Verfahren nach einem der vorangehenden Ansprüche,
**dadurch gekennzeichnet,**
**dass** bei einem durch das Anforderungsprofil beschriebenen kritischen Umfeldbereich insbesondere als Unterbereich des interessierenden Umfeldbereichs wenigstens zwei Radarsensoren (2, 2a-2h) zur redundanten Erfassung wenigstens eines Teils des kritischen Umfeldbereichs betrieben werden.

5. Verfahren nach einem der vorangehenden Ansprüche,
**dadurch gekennzeichnet,**
**dass** bei der Anpassung der Betriebsparameter der Radarsensoren (2, 2a-2h) auch wenigstens ein den Energieverbrauch und/oder die zu transportierende Datenmenge und/oder die benötigten Rechenressourcen minimierendes Effizienzkriterium (6) berücksichtigt wird.

6. Verfahren nach Anspruch 5,
**dadurch gekennzeichnet,**
**dass** bei einen nichtkritischen Anteil eines in dem Anforderungsprofil enthaltenen interessierenden Umfeldbereichs redundant erfassenden Radarsensoren (2, 2a-2h) einer der Radarsensoren (2, 2a-2h) abgeschaltet wird und/oder sein Erfassungbereich (3a-3h) zur Minimierung der Redundanz angepasst wird.

7. Verfahren nach einem der vorangehenden Ansprüche,
**dadurch gekennzeichnet,**
**dass** jeweils in den Eckbereichen des Kraftfahrzeugs (1, 1') und zwischen den Ecken des Kraftfahrzeugs (1, 1') einer von acht Radarsensoren (2, 2a-2h) angeordnet ist.

8. Verfahren nach einem der vorangehenden Ansprüche,
**dadurch gekennzeichnet,**
**dass** als Fahrsituationsdaten den Betriebszustand des Kraftfahrzeugs (1, 1') und/oder wenigstens einen prädiktiven Betriebszustand des Kraftfahrzeugs (1, 1') beschreibende Egodaten und/oder das Umfeld des Kraftfahrzeugs (1, 1') beschreibende Umfelddaten und/oder konkrete Anforderungen von wenigstens einem Fahrzeugsystem beschreibende Anforderungsdaten verwendet werden.

9. Kraftfahrzeug (1, 1') mit mehreren Radarsensoren (2, 2a-2h), welche in ihren Erfassungsbereichen (3a-h) das Umfeld des Kraftfahrzeugs (1, 1') in einem 360°-Winkelbereich erfassen und jeweils eine Recheneinrichtung (15) aufweisen, wobei die Recheneinrichtungen (15) der Radarsensoren (2, 2a-2h) und ein Steuergerät (4) des Kraftfahrzeugs (1, 1') zur Durchführung eines Verfahrens nach einem der vorangehenden Ansprüche ausgebildet sind.

10. Kraftfahrzeug nach Anspruch 9,
**dadurch gekennzeichnet,**
**dass** die Radarsensoren (2, 2a-2h) einen den Radar-Transceiver (12) realisierenden Halbleiterchip (11), insbesondere einen CMOS-Chip, umfassen.

11. Kraftfahrzeug nach Anspruch 10,
**dadurch gekennzeichnet,**
**dass** durch den Halbleiterchip (11) auch eine digitale Signalverarbeitungskomponente (14) und/oder eine Steuereinheit (12) des Radarsensors (2, 2a-2h) realisiert sind und/oder der Halbleiterchip (11) und eine Antennenanordnung (10) des Radarsensors (2, 2a-2h) als ein Package (9) realisiert sind.

## Claims

1. Method for operating a plurality of radar sensors (2, 2a-2h) in a motor vehicle (1, 1'), wherein radar sensors (2, 2a-2h) detecting the surroundings of the motor vehicle (1, 1') in a 360° angle range in their detection areas (3a-3h) are used and at least one operating parameter of the radar sensors (2, 2a-2h) can be changed, wherein driving situation data describing a current driving situation of the motor vehicle (1, 1') are evaluated in order to determine a requirement profile for the sensor data of the radar sensors (2, 2a-2h), and the operating parameters of the radar sensors (2, 2a-2h) are adapted to the requirement profile taking into account at least the detection properties of all the radar sensors (2, 2a-2h),
**characterised in that**
each of radar sensors (2, 2a-2h) has a computing unit (15) and the evaluation of the driving situation and the actuation of the radar sensors (2, 2a-2h) is carried out by the computing unit (15) of at least one of the radar sensors (2, 2a-2h), wherein the radar sensor (2, 2a-2h) whose computing unit (15) is used is dynamically selected depending on the driving situation data and/or the operating parameters.

2. Method according to claim 1,
**characterised in that**
an activation and/or a deactivation of a radar sensor (2, 2a-2h) is triggered by the operating parameters and/or a data acquisition rate and/or at least one operating parameter describing the detection area (3a-3h) and/or at least one operating parameter describing the distance separation capability and/or at least one operating parameter describing a preliminary evaluation to be carried out by the radar sensor (2, 2a-2h) is used as the operating parameter.

3. Method according to claim 1 or 2,
**characterised in that**,
in the case of a surrounding area of interest described by the requirement profile, only the radar sensors (2, 2a-2h) detecting the surrounding area of interest are operated or the radar sensors (2, 2a-2h) detecting the surrounding area of interest are operated with operating parameters which deliver more frequent and/or more accurate sensor data than the other radar sensors (2, 2a-2h).

4. Method according to any of the preceding claims,
**characterised in that**,
in the case of a critical surrounding area described by the requirement profile, in particular as a subarea of the surrounding area of interest, at least two radar sensors (2, 2a-2h) are operated to redundantly detect at least part of the critical surrounding area.

5. Method according to any of the preceding claims,
**characterised in that**,
when the operating parameters of the radar sensors (2, 2a-2h) are adapted, at least one efficiency criterion (6) that minimises the energy consumption and/or the amount of data to be transported and/or the required computing resources is also taken into account.

6. Method according to claim 5,
**characterised in that**,
in the case of radar sensors (2, 2a-2h) redundantly detecting a non-critical portion of a surrounding area of interest contained in the requirement profile, one of the radar sensors (2, 2a-2h) is switched off and/or its detection area (3a-3h) is adapted to minimise the redundancy.

7. Method according to any of the preceding claims,
**characterised in that**
one of eight radar sensors (2, 2a-2h) is arranged in each of the corner areas of the motor vehicle (1, 1') and between the corner areas of the motor vehicle (1, 1').

8. Method according to any of the preceding claims,
**characterised in that**
ego data describing the operating state of the motor vehicle (1, 1') and/or at least one predictive operating state of the motor vehicle (1, 1') and/or data on the surroundings describing the surroundings of the motor vehicle (1, 1') and/or requirement data describing specific requirements of at least one vehicle system are used as driving situation data.

9. Motor vehicle (1, 1') having several radar sensors (2, 2a-2h), which detect the surroundings of the motor vehicle (1, 1') in a 360° angle range in their detection areas (3ah) and each have a computing unit (15),
wherein the computing units (15) of the radar sensors (2, 2a-2h) and a control device (4) of the motor vehicle (1, 1') are designed to carry out a method according to any of the preceding claims.

10. Motor vehicle according to claim 9,
**characterised in that**
the radar sensors (2, 2a-2h) comprise a semiconductor chip (11) which implements the radar transceiver (12), in particular a CMOS chip.

11. Motor vehicle according to claim 10,
**characterised in that**
a digital signal processing component (14) and/or a control unit (12) of the radar sensor (2, 2a-2h) are implemented by the semiconductor chip (11) and/or or the semiconductor chip (11) and an antenna arrangement (10) of the radar sensor (2, 2a-2h) are implemented as a package (9).

## Revendications

1. Procédé pour faire fonctionner une pluralité de capteurs radar (2, 2a-2h) dans un véhicule automobile (1, 1'), dans lequel des capteurs radar (2, 2a-2h) saisissant l'environnement du véhicule automobile (1, 1') dans une portée angulaire de 360° sont utilisés dans leurs portées de saisie (3a-3h), et au moins un paramètre de fonctionnement des capteurs radar (2, 2a-2h) peut être modifié, dans lequel les données de situation de conduite décrivant une situation de conduite réelle du véhicule automobile (1, 1') sont évaluées pour déterminer un profil d'exigences pour les données des capteurs radar (2, 2a-2h) et les paramètres de fonctionnement des capteurs radar (2, 2a-2h) sont adaptés au profil d'exigences en tenant compte au moins des caractéristiques de saisie de tous les capteurs radar (2, 2a-2h),
**caractérisé en ce que**
chacun des capteurs radar (2, 2a-2h) présente un appareil de calcul (15) et l'évaluation de la situation de conduite et l'activation des capteurs radar (2, 2a-2h) par l'appareil de calcul (15) d'au moins un des capteurs radar (2, 2a-2h) a lieu, dans lequel le capteur radar (2, 2a-2h) dont l'appareil de calcul (15) est utilisé, est sélectionné de manière dynamique en fonction des données de la situation de conduite et/ou des paramètres de fonctionnement.

2. Procédé selon la revendication 1,
**caractérisé en ce que**
une activation et/ou une désactivation d'un capteur radar (2, 2a-2h) est déclenchée par les paramètres de fonctionnement et/ou, en tant que paramètre de fonctionnement, un taux d'acquisition des données et/ou au moins un paramètre de fonctionnement décrivant la portée de saisie (3a-3h) et/ou au moins un paramètre de fonctionnement décrivant la capacité de séparation de distance et/ou au moins un paramètre de fonctionnement décrivant la pré-évaluation à devant être effectuée par le capteur radar (2, 2a-2h) sont utilisés.

3. Procédé selon la revendication 1 ou 2,
**caractérisé en ce que**
dans le cas d'une portée d'environnement d'intérêt décrite par le profil de demande, seulement les capteurs radar (2, 2a-2h) saisissant la portée d'environnement d'intérêt ou les capteurs radar (2, 2a-2h) saisissant la portée d'environnement d'intérêt avec des données de capteur plus fréquentes et/ou plus précises que les autres capteurs radar (2, 2a-2h) sont mis en fonctionnement.

4. Procédé selon l'une quelconque des revendications précédentes,
**caractérisé en ce que**
dans le cas d'une portée d'environnement critique décrite par le profil d'exigences, en particulier comme une sous-portée de la portée d'environnement d'intérêt, au moins deux capteurs radar (2, 2a-2h) sont exploités pour la saisie redondante d'au moins une partie de la portée d'environnement critique.

5. Procédé selon l'une quelconque des revendications précédentes,
**caractérisé en ce que**
lors de l'adaptation des paramètres de fonctionnement des capteurs radar (2, 2a-2h), également au moins un critère d'efficacité minimisant la consommation d'énergie et/ou la quantité de données à transporter et/ou les ressources informatiques nécessaires (6) est pris en compte.

6. Procédé selon la revendication 5,
**caractérisé en ce que**
dans le cas d'une partie non critique d'une portée d'environnement d'intérêt contenue dans le profil d'exigences saisissant de manière redondante des capteurs radar (2, 2a-2h), l'un des capteurs radar (2, 2a-2h) est désactivé et/ou sa portée de saisie (3a-3h) est adaptée pour minimiser la redondance.

7. Procédé selon l'une quelconque des revendications précédentes,
**caractérisé en ce que**
un parmi huit capteurs radar (2, 2a-2h) est agencé respectivement dans les portées de coins du véhicule automobile (1, 1') et entre les angles du véhicule automobile (1,1').

8. Procédé selon l'une quelconque des revendications précédentes,
**caractérisé en ce que**
les données sur l'ego décrivant l'état de fonctionnement du véhicule automobile (1, 1') et/ou au moins un état de fonctionnement prédictif du véhicule automobile (1, 1') et/ou les données sur l'environnement décrivant l'environnement du véhicule automobile (1,1') et/ou les données sur les exigences décrivant les exigences spécifiques d'au moins un système du véhicule sont utilisées comme données sur la situation de conduite.

9. Véhicule automobile (1, 1') avec plusieurs capteurs radar (2, 2a-2h) qui, dans leurs portées de saisie (3 bis-h), saisissent l'environnement du véhicule automobile (1, 1') dans une portée angulaire de 360° et présentent chacun un appareil de calcul (15) ;
dans lequel les appareils de calcul (15) des capteurs radar (2, 2a-2h) et un équipement de commande (4) du véhicule automobile (1, 1') sont réalisés pour effectuer un procédé selon l'une quelconque des revendications précédentes.

10. Véhicule automobile selon la revendication 9,
**caractérisé en ce que**
les capteurs radar (2, 2a-2h) comprennent une puce semi-conductrice (11) réalisant l'émetteur-récepteur radar (12), en particulier une puce CMOS.

11. Véhicule automobile selon la revendication 10,
**caractérisé en ce que**
également un composant de traitement de signal (14) numérique et/ou une unité de commande (12) du capteur radar (2, 2a-2h) sont réalisés et/ou la puce semi-conductrice (11) et un agencement d'antenne (10) du capteur radar (2, 2a-2h) sont réalisés par la puce semi-conductrice (11) comme un ensemble (9).
